# EUROPÄISCHE PATENTSCHRIFT

(11) **EP 3 366 820 B1**
(45) Veröffentlichungstag und Bekanntmachung des Hinweises auf die Patenterteilung: **02.10.2019**
(21) Anmeldenummer: 18156298.4
(22) Anmeldetag: 12.02.2018
(51) Int. Cl.: D01H 1/38, D01H 9/16

(54) **KLEMMVORRICHTUNG, SPINDEL MIT EINER KLEMMVORRICHTUNG UND VERFAHREN ZUM HERSTELLEN EINER KLEMMVORRICHTUNG**
CLAMPING DEVICE, SPINDLE PROVIDED WITH A CLAMPING DEVICE AND METHOD FOR PRODUCING A CLAMPING DEVICE
DISPOSITIF DE SERRAGE, BROCHE POURVUE DE DISPOSITIF DE SERRAGE ET PROCÉDÉ DE FABRICATION D'UN DISPOSITIF DE SERRAGE

(30) Priorität: 23.02.2017 DE 102017103754
(43) Veröffentlichungstag der Anmeldung: 29.08.2018
(73) Patentinhaber: Maschinenfabrik Rieter AG, 8406 Winterthur (CH)
(72) Erfinder: HENEK, Vaclav, 68001 Boskovice (CZ)
(74) Vertreter: Baudler, Ron

(56) Entgegenhaltungen:
- CN-A- 106 120 035
- CN-A- 106 120 036
- CN-U- 202 881 509

## Beschreibung

Die vorliegende Erfindung betrifft eine Klemmvorrichtung für eine Ringspinnmaschine zum Klemmen und Trennen eines Fadens, mit einem Grundelement, das eine Durchbrechung zum Umschließen eines Schafts einer Spindel der Ringspinnmaschine aufweist, mit einem relativ zum Grundelement beweglich gelagerten Klemmelement, wobei das Klemmelement zwischen einer Schließstellung, in der der Faden zwischen dem Grundelement und dem Klemmelement geklemmt ist, und mindestens einer Offenstellung, in der keine Klemmung des Fadens erfolgt, bewegbar ist, mit einem Trennelement zum Trennen des Fadens und mit einem Halteelement. Des Weiteren betrifft die Erfindung eine Spindel für eine Ringspinnmaschine sowie ein Verfahren zum Herstellen einer entsprechenden Klemmvorrichtung.

Derartige Klemmvorrichtungen sind wohlbekannt und werden bei vielen Ringspinnmaschinen eingesetzt. So zeigt beispielsweise die EP 358 032 A1 eine solche Klemmvorrichtung. Bei dieser ist ein Trennelement sicher auf einem Trennelementhalter fixiert. Üblicherweise ist das Trennelement dabei einfach auf den Trennelementhalter geklebt. Bei der Produktion der Klemmvorrichtung ergibt sich in diesem Fall die Schwierigkeit, dass die Klebung zum einen gleichmäßig sein muss, damit bei den hohen Umdrehungszahlen der Spindel keine Unwucht auftritt, und zum anderen vor dem nächsten Produktionsschritt aushärten muss. Ein oben aufgeklebtes Trennelement birgt außerdem die Gefahr, dass Bedienpersonal mit dem Trennelement in Kontakt kommt und sich dabei verletzt. Schließlich besteht die Gefahr, dass sich die Klebeverbindung löst und von dem dann recht frei beweglichen Trennelement eine noch größere Verletzungsgefahr ausgeht.

Weitere Klemmvorrichtungen sind auch aus CN 106 120 035 A und CN 202 881 509 U bekannt.

Aufgabe der vorliegenden Erfindung ist es somit, eine Klemmvorrichtung ohne die oben genannten Nachteile zu schaffen und ein Verfahren zu ihrer Herstellung vorzuschlagen.

Die Aufgabe wird gelöst durch eine Klemmvorrichtung, eine damit ausgerüstete Spindel und ein Verfahren zur Herstellung einer Klemmvorrichtung mit den Merkmalen der unabhängigen Patentansprüche.

Vorgeschlagen wird eine Klemmvorrichtung für eine Ringspinnmaschine zum Klemmen und Trennen eines Fadens. Dabei wird, wenn ein Doffvorgang, also ein Austauschen eines Kopses (= mit Garn bespulte Hülse) gegen eine leere Hülse, ansteht, der Faden von der Klemmvorrichtung fest geklemmt. Beim Abziehen des Kopses von einer Spindel wird der Faden dann mit Hilfe des Trennelements, das wie ein Messer wirkt, durchtrennt.

Die Klemmvorrichtung umfasst ein Grundelement, das eine Durchbrechung zum Umschließen eines Schafts der Spindel der Ringspinnmaschine aufweist. Üblicherweise ist der Durchmesser dieser Durchbrechung auf den Durchmesser des Schafts der Spindel abgestimmt, so dass die Klemmvorrichtung kraftschlüssig auf dem Schaft der Spindel befestigt werden kann.

Des Weiteren weist die Klemmvorrichtung ein relativ zum Grundelement beweglich gelagertes Klemmelement auf. Das Klemmelement ist dabei zwischen einer Schließstellung, in der der Faden zwischen dem Grundelement und dem Klemmelement geklemmt ist, und mindestens einer Offenstellung, in der keine Klemmung des Fadens erfolgt, bewegbar.

Schließlich umfasst die Klemmvorrichtung ein Trennelement zum Trennen des Fadens. Das Trennelement ist dabei beispielsweise als Schneidmesser ausgebildet.

Erfindungsgemäß weist die Klemmvorrichtung ein Halteelement zum Fixieren des Trennelements auf, wobei das Trennelement zwischen dem Grundelement und dem Halteelement formschlüssig fixiert ist. Zudem ist das Halteelement mit dem Grundelement durch eine stoffschlüssige Verbindung verbunden. Durch die formschlüssige Fixierung wird das Trennelement zumindest teilweise vom Halteelement abgedeckt, so dass die Gefahr einer direkten Berührung durch das Bedienpersonal vermindert wird. Außerdem kann sich das Trennelement durch die formschlüssige Fixierung nicht mehr vom Grundelement lösen.

Das Halteelement ist also mit dem Grundelement stoffschlüssig verbunden. Dabei kann für das Halteelement ein solches Material gewählt werden, dass die stoffschlüssige Verbindung schnell und sicher ausgeführt werden kann. Beispielsweise ist eine stoffschlüssige Verbindung zwischen zwei gleichen oder ähnlichen Kunststoffen leicht und sicher zu verwirklichen, so dass das Halteelement und das Grundelement, zumindest im Bereich ihrer Verbindung, aus demselben Material oder zumindest derselben Materialart (vorzugsweise Kunststoff) bestehen sollte.

Vorteilhafterweise wird die stoffschlüssige Verbindung ohne Zusatzwerkstoffe ausgeführt. So besteht keine Gefahr, dass die Zusatzwerkstoffe, also beispielsweise Kleber, ungleichmäßig verteilt sind und damit eine Unwucht verursachen.

In einer besonders vorteilhaften Weiterbildung der Erfindung ist die stoffschlüssige Verbindung eine Ultraschallschweißverbindung. Eine solche Verbindung lässt sich äußerst schnell herstellen, bedarf keines Aushärtens eines Klebers und ist - die richtigen Materialien von Grundelement und Halteelement vorausgesetzt - sehr stark.

Von Vorteil ist es auch, wenn das Halteelement mit dem Grundelement darüber hinaus durch eine kraftschlüssige Verbindung verbunden ist. Bei dieser kraftschlüssigen Verbindung kann es sich beispielsweise um eine Klemmung handeln. Die kraftschlüssige Verbindung verstärkt dabei die stoffschlüssige Verbindung. Außerdem kann sie die Herstellung der Klemmvorrichtung erleichtern, da das Halteelement zunächst mit dem Grundelement kraftschlüssig verbunden werden kann. Dadurch sind die beiden Elemente schon in der richtigen Lage zueinander und müssen für die anschließende stoffschlüssige Verbindung nicht mehr extra ausgerichtet werden.

Des Weiteren ist es von Vorteil, wenn das Halteelement und/oder das Grundelement auf der dem jeweils anderen Element zugewandten Seite mindestens einen Vorsprung aufweist zum Herstellen der kraftschlüssigen Verbindung des Halteelements mit dem Grundelement. Besonders vorteilhaft ist es dabei, wenn die Vorsprünge bezüglich der Achse der Spindel symmetrisch verteilt sind, damit eine Unwucht durch diese Vorsprünge ausgeschlossen wird.

Vorteilhaft ist es auch, wenn das Halteelement eine Durchbrechung aufweist und der Durchmesser der Durchbrechung des Halteelements größer oder gleich dem Durchmesser der Durchbrechung des Grundelements ist. Der Kontakt zwischen der Klemmvorrichtung und dem Schaft der Spindel wird also zumindest teilweise vom Grundelement hergestellt. Da das Grundelement üblicherweise größer als das Halteelement ist, ist somit ein guter Kontakt zum Schaft der Spindel möglich.

Von Vorteil ist es auch, wenn der Außendurchmesser des Grundelements, insbesondere an der Stelle eines Klemmkranzes des Grundelements, größer als der Außendurchmesser des Trennelements ist. In diesem Fall sind am Klemmkranz vorzugsweise Aussparungen vorgesehen, durch die der Faden bis zum Trennelement vordringen kann. Diese Aussparungen sind aber so klein, dass ein Finger des Bedienpersonals nicht zum Trennelement vordringen kann und damit die Verletzungsgefahr gemindert ist.

Ebenso ist es vorteilhaft, wenn der Außendurchmesser des Trennelements größer als der Außendurchmesser des Halteelements ist. So kann, selbst ohne weitere Aussparungen im Halteelement, der Faden bis zum Trennelement vordringen.

In einer vorteilhaften Weiterbildung der Erfindung ist ein Rückstellelement, insbesondere eine Feder, vorgesehen, das auf das Klemmelement eine Kraft in Richtung der Schließstellung ausübt. Das Schließelement wird also durch das Rückstellelement in seine Schließstellung bewegt. Um das Klemmelement in die Offenstellung zu bewegen, muss also eine weitere Kraft aufgewendet werden. So kann beispielsweise das Klemmelement einen Überstand aufweisen, in den ein Teil der Spinnmaschine oder eines Roboters eingreift und das Klemmelement in die Offenstellung drückt.

Vorteilhafterweise weist die Klemmvorrichtung jedoch mindestens einen Fliehkörper auf, der mit einer Innenfläche des Klemmelements in Eingriff steht, die schräg zur axialen Richtung der Klemmvorrichtung steht. Wenn die Spindel mit der Klemmvorrichtung rotiert, erfährt der Fliehkörper eine Zentrifugalkraft. Er drückt damit gegen die schräg zur axialen Richtung der Klemmvorrichtung stehende Innenfläche des Klemmelements, wodurch das Klemmelement eine Kraft in Richtung der Offenstellung erfährt. Dreht sich die Spindel mit der Klemmvorrichtung schnell genug, dann wird das Klemmelement in die Offenstellung bewegt.

Die Klemmvorrichtung ist gemäß der vorangegangenen Beschreibung ausgebildet, wobei die genannten Merkmale einzeln oder in beliebiger Kombination vorhanden sein können.

Des Weiteren wird eine Spindel für eine Ringspinnmaschine vorgeschlagen, wobei die Spindel eine erfindungsgemäße Klemmvorrichtung aufweist. Die für die Klemmvorrichtung genannten Vorteile gelten auch für die Spindel mit der erfindungsgemäßen Klemmvorrichtung.

Ferner wird ein Verfahren zum Herstellen einer oben ausgeführten Klemmvorrichtung vorgeschlagen. Erfindungsgemäß wird dabei das Trennelement zwischen dem Grundelement und dem Halteelement positioniert und anschließend das Halteelement mit dem Grundelement stoffschlüssig verbunden. Somit ist das Trennelement formschlüssig zwischen dem Grundelement und dem Halteelement fixiert.

Vorteilhafterweise wird die stoffschlüssige Verbindung des Halteelements mit dem Grundelement durch Ultraschallschweißen hergestellt. Ultraschallschweißen ist kostengünstig, geht schnell und sorgt - die richtigen Materialien der beiden Elemente vorausgesetzt - für eine feste und sichere Verbindung.

Schließlich ist es von Vorteil, wenn beim Positionieren des Trennelements zwischen dem Grundelement und dem Halteelement eine kraftschlüssige Verbindung zwischen dem Grundelement und dem Halteelement hergestellt wird. Zum einen verstärkt diese kraftschlüssige Verbindung die stoffschlüssige Verbindung. Zum anderen kann mit Hilfe der kraftschlüssigen Verbindung das Halteelement in Bezug auf das Grundelement richtig positioniert werden, so dass für die stoffschlüssige Verbindung keine besonderen Maßnahmen zur Positionierung der beiden Elemente mehr vorgenommen werden müssen.

Weitere Vorteile der Erfindung sind in den nachfolgenden Ausführungsbeispielen beschrieben. Es zeigt:
- **Figur 1**: eine Seitenansicht einer Spindel für eine Ringspinnmaschine,
- **Figur 2a**: eine Seitenansicht eines Ausschnitts der Spindel aus Figur 1,
- **Figur 2b**: eine weitere Seitenansicht eines Ausschnitts der Spindel aus Figur 1,
- **Figur 3a**: eine Draufsicht auf eine Klemmvorrichtung,
- **Figur 3b**: eine Draufsicht auf eine weitere Klemmvorrichtung,
- **Figur 4a**: einen Querschnitt durch eine Klemmvorrichtung,
- **Figur 4b**: einen weiterer Querschnitt durch die Klemmvorrichtung aus Figur 4a.

Bei der nachfolgenden Beschreibung alternativer Ausführungsbeispiele werden für Merkmale, die im Vergleich zu anderen Ausführungsbeispielen in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise der Ausgestaltung und Wirkweise der vorstehend bereits beschriebenen Merkmale.

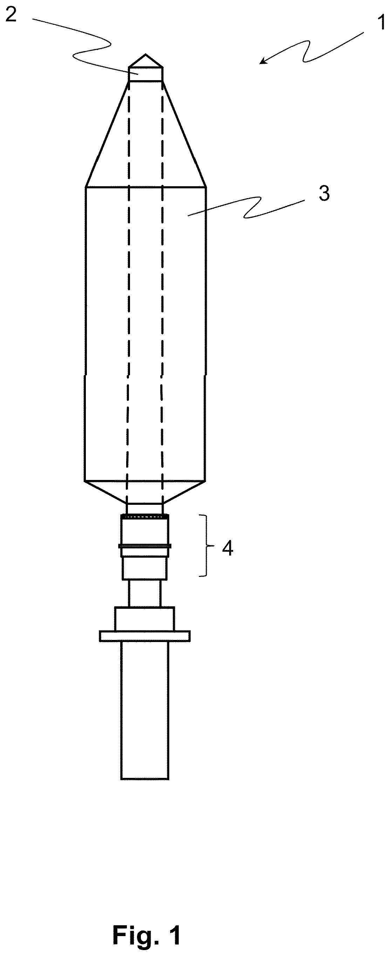

Figur 1 zeigt eine Seitenansicht einer Spindel 1 für eine Ringspinnmaschine. Auf einem Schaft 2 der Spindel 1 befindet sich eine hier nicht dargestellte Hülse, auf die ein Faden zu einem Kops 3 aufgewickelt wurde. Unterhalb des Kopses 3 ist auf dem Schaft 2 der Spindel 1 ist eine Klemmvorrichtung 4 angeordnet.

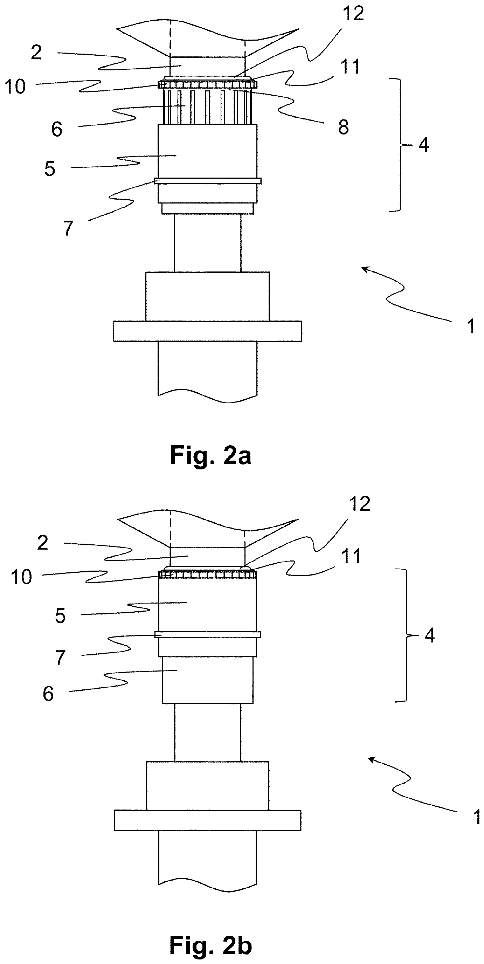

Figur 2a zeigt die Klemmvorrichtung 4 detaillierter, hier in einer sogenannten Offenstellung. In der Offenstellung befindet sich die Klemmvorrichtung 4 kurz vor dem Abnehmen des Kopses 3 von der Spindel 1. Dabei wurde ein Klemmelement 5, das gegenüber einem Grundelement 6 beweglich gelagert ist, an einem Überstand 7 heruntergezogen, so dass ein Unterwindbereich 8 offen ist. Es werden nun einige Wicklungen Faden auf den Unterwindbereich 8 aufgewickelt. Zwischen dem Kops 3 und dem Unterwindbereich 8 läuft der Faden durch Aussparungen 9 eines Klemmkranzes 10 des Grundelements 6. Dabei läuft der Faden auch über ein Trennelement 11. Das Trennelement 11 ist dabei formschlüssig zwischen dem Grundelement 6 und einem Halteelement 12 fixiert. Das Halteelement 12 ist ferner, insbesondere durch Ultraschallschweißen, stoffschlüssig mit dem Grundelement 6 verbunden.

Im weiteren Verlauf wird, wie in Figur 2b gezeigt, das Klemmelement 5 in eine Schließstellung bewegt, so dass der Faden fest in der Klemmvorrichtung 4 eingeklemmt ist. Wird nun der Kops 3 von der Spindel 1 abgezogen, wird der über das Trennelement 11 laufende Faden durch das Trennelement 11 getrennt. Anschließend wird eine leere Hülse auf die Spindel 1 gesteckt und der in der Klemmvorrichtung 4 eingeklemmte Faden wird auf die leere Hülse angelegt.

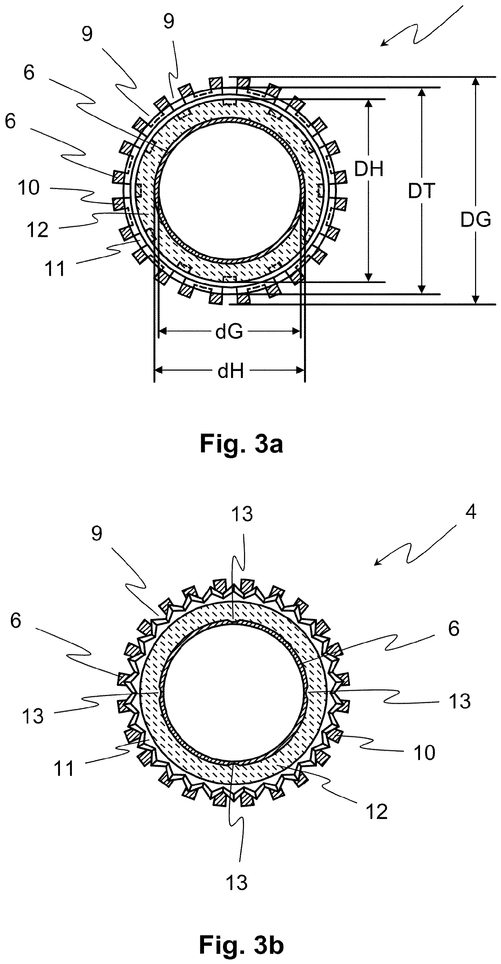

Figur 3a zeigt eine Draufsicht auf eine Klemmvorrichtung 4. Die Schraffuren dienen dabei nur der leichteren Erkennbarkeit der einzelnen Elemente, sie deuten keine Schnittflächen an. Von den Aussparungen 9 des Klemmkranzes 10 wurden der Übersichtlichkeit halber nur zwei mit Bezugszeichen versehen.

Der Außendurchmesser DG des Klemmkranzes 10 des Grundelements 6 ist größer als der Außendurchmesser DT des Trennelements 11. Dadurch wird die Verletzungsgefahr für Bedienpersonal gering gehalten. Der geklemmte Faden läuft hingegen durch die Aussparungen 9 des Klemmkranzes 10 und kann somit vom Trennelement 11 getrennt werden. Des Weiteren ist der Außendurchmesser DH des Halteelements 12 geringer als der Außendurchmesser DT des Trennelements 11, so dass der Faden auch ohne Aussparungen im Halteelement 12 zum Trennelement 11 vordringen kann.

Ferner ist der Durchmesser dG einer Durchbrechung des Grundelements 6 kleiner als der Durchmesser dH einer Durchbrechung des Halteelements 12.

Somit wird der Kontakt der Klemmvorrichtung 4 mit dem Schaft der Spindel über das Grundelement 6 hergestellt, was einen guten Kontakt und einen sicheren Halt gewährleistet.

Figur 3b zeigt eine Draufsicht auf eine weitere Klemmvorrichtung 4. Im Vergleich zu der in Figur 3a gezeigten Klemmvorrichtung 4 weist die Klemmvorrichtung 4 der Figur 3b ein gezahntes Trennelement 11 auf, das durch die Zahnung bessere Trenneigenschaften als das Trennelement 11 der Figur 3a hat.

Des Weiteren weist das Halteelement 12 vier Vorsprünge 13 auf. Diese Vorsprünge 13 sind symmetrisch angeordnet, damit die Klemmvorrichtung 4 keine Unwucht aufweist. Eine andere Anzahl an Vorsprüngen 13 ist ebenfalls denkbar. Mittels der Vorsprünge 13 wird eine kraftschlüssige Verbindung des Halteelements 12 mit dem Grundelement 6 erreicht. Diese kraftschlüssige Verbindung verstärkt die stoffschlüssige Verbindung des Halteelements 12 mit dem Grundelement 6. Außerdem ist die kraftschlüssige Verbindung bei der Herstellung der Klemmvorrichtung 4 vorteilhaft: so wird zunächst das Halteelement 12 kraftschlüssig mit dem Grundelement 6 verbunden und dann mittels Ultraschallschweißens stoffschlüssig verbunden. Eine exakte Positionierung des Halteelements 12 in Bezug auf das Grundelement 6 für das Ultraschallschweißen wird dabei von der kraftschlüssigen Verbindung zustande gebracht und muss nicht mehr separat vorgenommen werden.

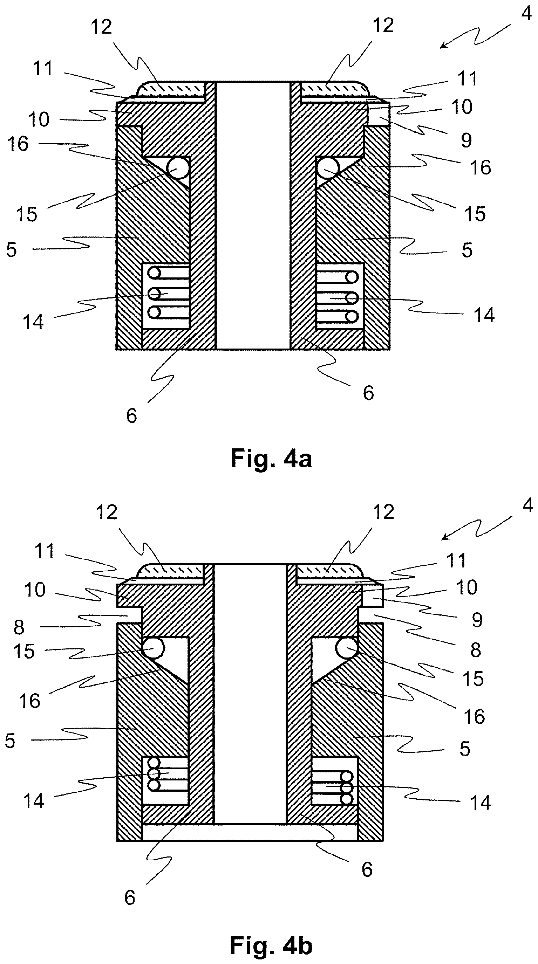

Figur 4a zeigt einen Querschnitt durch eine weitere Klemmvorrichtung 4 in der Schließstellung. Das Klemmelement 5 wird dabei durch das Rückstellelement 14, hier eine Spiralfeder, in der Schließstellung gehalten. Außerdem sind mehrere Fliehkörper 15 in Form von kleinen Metallkugeln vorgesehen. Diese stehen in Eingriff mit einer Innenfläche 16 des Klemmelements 5, die schräg zur axialen Richtung der Klemmvorrichtung 4 steht.

In Figur 4b wird die Klemmvorrichtung 4 aus Figur 4a gezeigt, wenn sie rotiert. Durch die Fliehkraft werden die Fliehkörper 15 nach außen gedrückt. Da die Fliehkörper 15 mit der schräg stehenden Innenfläche 16 des Klemmelements 5 in Eingriff stehen, drücken sie das Klemmelement 5 entgegen der Kraft des Rückstellelements 14 nach unten und damit in die Offenstellung. Das Aufwickeln des Fadens in der Offenstellung und das Klemmen des Fadens in der Schließstellung erfolgt dann wie oben beschrieben.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Spindel
- 2: Schaft
- 3: Kops
- 4: Klemmvorrichtung
- 5: Klemmelement
- 6: Grundelement
- 7: Überstand
- 8: Unterwindbereich
- 9: Aussparung
- 10: Klemmkranz
- 11: Trennelement
- 12: Halteelement
- 13: Vorsprung
- 14: Rückstellelement
- 15: Fliehkörper
- 16: Innenfläche
- dG: Durchmesser der Durchbrechung des Grundelements
- dH: Durchmesser der Durchbrechung des Halteelements
- DG: Außendurchmesser des Grundelements
- DT: Außendurchmesser des Trennelements
- DH: Außendurchmesser des Halteelements

## Patentansprüche

1. Klemmvorrichtung für eine Ringspinnmaschine zum Klemmen und Trennen eines Fadens, mit einem Grundelement (6), das eine Durchbrechung zum Umschließen eines Schafts (2) einer Spindel (1) der Ringspinnmaschine aufweist, mit einem relativ zum Grundelement (6) beweglich gelagerten Klemmelement (5), wobei das Klemmelement (5) zwischen einer Schließstellung, in der der Faden zwischen dem Grundelement (6) und dem Klemmelement (5) geklemmt ist, und mindestens einer Offenstellung, in der keine Klemmung des Fadens erfolgt, bewegbar ist, mit einem Trennelement (11) zum Trennen des Fadens,
und mit einem Halteelement (12) zum Fixieren des Trennelements (11), wobei das Trennelement (11) zwischen dem Grundelement (6) und dem Halteelement (12) fixiert ist, **dadurch gekennzeichnet, dass** das Trennelement (11) zwischen dem Grundelement (6) und dem Halteelement (12) formschlüssig fixiert ist und das Halteelement (12) mit dem Grundelement (6) durch eine stoffschlüssige Verbindung verbunden ist.

2. Klemmvorrichtung nach dem vorherigen Anspruch, **dadurch gekennzeichnet, dass** die stoffschlüssige Verbindung ohne Zusatzwerkstoffe ausgeführt ist.

3. Klemmvorrichtung nach einem der vorherigen Ansprüche, **dadurch gekennzeichnet, dass** die stoffschlüssige Verbindung eine Ultraschallschweißverbindung ist.

4. Klemmvorrichtung nach einem der vorherigen Ansprüche, **dadurch gekennzeichnet, dass** das Halteelement (12) mit dem Grundelement (6) darüber hinaus durch eine kraftschlüssige Verbindung verbunden ist.

5. Klemmvorrichtung nach einem der vorherigen Ansprüche, **dadurch gekennzeichnet, dass** das Halteelement (12) und/oder das Grundelement (6) auf der dem Grundelement (6) bzw. Halteelement (12) zugewandten Seite mindestens einen Vorsprung (13) aufweist zum Herstellen der kraftschlüssigen Verbindung des Halteelements (12) mit dem Grundelement (6).

6. Klemmvorrichtung nach einem der vorherigen Ansprüche, **dadurch gekennzeichnet, dass** das Halteelement (12) eine Durchbrechung aufweist und der Durchmesser (dH) der Durchbrechung des Halteelements (12) größer oder gleich dem Durchmesser (dG) der Durchbrechung des Grundelements (6) ist.

7. Klemmvorrichtung nach einem der vorherigen Ansprüche, **dadurch gekennzeichnet, dass** der Außendurchmesser (DG) des Grundelements (6), insbesondere an der Stelle eines Klemmkranzes (10) des Grundelements (6), größer als der Außendurchmesser (DT) des Trennelements (11) und/oder der Außendurchmesser (DT) des Trennelements (11) größer als der Außendurchmesser (DH) des Halteelements (12) ist.

8. Klemmvorrichtung nach einem der vorherigen Ansprüche, **dadurch gekennzeichnet, dass** ein Rückstellelement (14), insbesondere eine Feder (14), vorgesehen ist, das auf das Klemmelement (5) eine Kraft in Richtung der Schließstellung ausübt.

9. Klemmvorrichtung nach einem der vorherigen Ansprüche, **dadurch gekennzeichnet, dass** mindestens ein Fliehkörper (15) vorgesehen ist, der mit einer Innenfläche (16) des Klemmelements (5) in Eingriff steht, die schräg zur axialen Richtung der Klemmvorrichtung (4) steht.

10. Spindel für eine Ringspinnmaschine mit einer Klemmvorrichtung (4) nach einem oder mehreren der vorherigen Ansprüche.

11. Verfahren zum Herstellen einer Klemmvorrichtung (4) nach einem oder mehreren der Ansprüche 1 bis 9, **dadurch gekennzeichnet, dass** das Trennelement (11) zwischen dem Grundelement (6) und dem Halteelement (12) positioniert wird und anschließend das Halteelement (12) mit dem Grundelement (6) stoffschlüssig verbunden wird.

12. Verfahren nach dem vorherigen Anspruch, **dadurch gekennzeichnet, dass** die stoffschlüssige Verbindung durch Ultraschallschweißen hergestellt wird.

13. Verfahren nach einem oder mehreren der Ansprüche 11 und 12, **dadurch gekennzeichnet, dass** beim Positionieren des Trennelements (11) zwischen dem Grundelement (6) und dem Halteelement (12) eine kraftschlüssige Verbindung zwischen dem Grundelement (6) und dem Halteelement (12) hergestellt wird.

## Claims

1. A clamping device for a ring spinning machine for clamping and cutting off a thread, having a base element (6) comprising a penetration for enclosing a shaft (2) of a spindle (1) of the ring spinning machine, having a clamping element (5) supported displaceably relative to the base element (6), said clamping element (5) being displaceable between a closed position in which the thread is clamped between the base element (6) and the clamping element (5) and at least one open position in which the thread is not clamped, having a cut-off element (11) for cutting off the thread,
and having a retaining element (12) for fixing the cut-off element (11), wherein the cut-off element (11) is fixed between the base element (6) and the retaining element (12), **characterized in that** the cut-off element (11) is positively fixed between the base element (6) and the retaining element (12) and the retaining element (12) is connected to the base element (6) by means of a material connection.

2. The clamping device according to the preceding claim, **characterized in that** the material connection is performed without additional materials.

3. The clamping device according to any one of the preceding claims, **characterized in that** the material connection is an ultrasonic weld connection.

4. The clamping device according to any one of the preceding claims, **characterized in that** the retaining element (12) is further connected to the base element (6) by means of a force-fit connection.

5. The clamping device according to any one of the preceding claims, **characterized in that** the retaining element (12) and/or the base element (6) comprises at least one protrusion (13) on the side facing the base element (6) or the retaining element (12) for producing the force-fit connection of the retaining element (12) to the base element (6).

6. The clamping device according to any one of the preceding claims, **characterized in that** the retaining element (12) comprises a penetration and the diameter (dH) of the penetration of the retaining element (12) is greater than or equal to the diameter (dG) of the penetration of the base element (6).

7. The clamping device according to any one of the preceding claims, **characterized in that** the outer diameter (DG) of the base element (6), particularly at the location of a clamping collar (10) of the base element (6), is greater than the outer diameter (DT) of the cut-off element (11), and/or the outer diameter (DT) of the cut-off element (11) is greater than the outer diameter (DH) of the retaining element (12).

8. The clamping device according to any one of the preceding claims, **characterized in that** a return element (14), particularly a spring (14), is provided and exerts a force on the clamping element (5) in the direction toward the closed position.

9. The clamping device according to any one of the preceding claims, **characterized in that** at least one centrifugal body (15) is provided and makes contact with an inner surface (16) of the clamping element (5), said surface being at an angle to the axial direction of the clamping device (4).

10. A spindle for a ring spinning machine having a clamping device (4) according to any one or more of the preceding claims.

11. A method for producing a clamping device (4) according to any one or more of the claims 1 through 9, **characterized in that** the cut-off element (11) is positioned between the base element (6) and the retaining element (12) and then the retaining element (12) is materially connected to the base element (6).

12. The method according to the preceding claim, **characterized in that** the material connection is produced by ultrasonic welding.

13. The method according to one or more of the claims 11 and 12, **characterized in that** when positioning the cut-off element (11) between the base element (6) and the retaining element (12), a force-fit connection is produced between the base element (6) and the retaining element (12).

## Revendications

1. Dispositif de serrage pour un métier à filer à anneaux pour serrer et séparer un fil, avec un élément de base (6) qui présente une perforation pour entourer une tige (2) d'une broche (1) du métier à filer à anneaux, avec un élément de serrage (5) monté de manière mobile par rapport à l'élément de base (6), l'élément de serrage (5) étant mobile entre une position fermée, dans laquelle le fil est serré entre l'élément de base (6) et l'élément de serrage (5), et au moins une position ouverte, dans laquelle aucun serrage du fil n'a lieu, avec un élément de séparation (11) pour séparer le fil, et avec un élément d'arrêt (12) pour fixer l'élément de séparation (11), l'élément de séparation (11) étant fixé entre l'élément de base (6) et l'élément d'arrêt (12), **caractérisé en ce que** l'élément de séparation (11) est fixé par complémentarité de formes entre l'élément de base (6) et l'élément d'arrêt (12) et l'élément d'arrêt (12) est relié à l'élément de base (6) par une liaison par conjugaison de matières.

2. Dispositif de serrage selon la revendication précédente, **caractérisé en ce que** la liaison par conjugaison de matières est réalisée sans matériaux supplémentaires.

3. Dispositif de serrage selon l'une des revendications précédentes, **caractérisé en ce que** la liaison par conjugaison de matières est une liaison par soudage ultrasonore.

4. Dispositif de serrage selon l'une des revendications précédentes, **caractérisé en ce que** l'élément d'arrêt (12) est en plus relié à l'élément de base (6) par une liaison par complémentarité de forces.

5. Dispositif de serrage selon l'une des revendications précédentes, **caractérisé en ce que** l'élément d'arrêt (12) et/ou l'élément de base (6) présente(nt) au moins une protubérance (13) sur le côté tourné vers l'élément de base (6) ou l'élément d'arrêt (12) pour réaliser la liaison par complémentarité de forces de l'élément d'arrêt (12) avec l'élément de base (6).

6. Dispositif de serrage selon l'une des revendications précédentes, **caractérisé en ce que** l'élément d'arrêt (12) présente une perforation et le diamètre (dH) de la perforation de l'élément d'arrêt (12) est supérieur ou égal au diamètre (dG) de la perforation de l'élément de base (6).

7. Dispositif de serrage selon l'une des revendications précédentes, **caractérisé en ce que** le diamètre extérieur (DG) de l'élément de base (6), en particulier à l'emplacement d'une couronne de serrage (10) de l'élément de base (6), est supérieur au diamètre extérieur (DT) de l'élément de séparation (11) et/ou le diamètre extérieur (DT) de l'élément de séparation (11) est supérieur au diamètre extérieur (DH) de l'élément d'arrêt (12).

8. Dispositif de serrage selon l'une des revendications précédentes, **caractérisé en ce qu'**il est prévu un élément de rappel (14), en particulier un ressort (14), qui exerce sur l'élément de serrage (5) une force orientée dans la direction de la position fermée.

9. Dispositif de serrage selon l'une des revendications précédentes, **caractérisé en ce qu'**il est prévu au moins un corps centrifuge (15) qui est en prise avec une surface intérieure (16) de l'élément de serrage (5), qui est oblique à la direction axiale du dispositif de serrage (4).

10. Broche pour un métier à filer à anneaux avec un dispositif de serrage (4) selon l'une ou plusieurs des revendications précédentes.

11. Procédé pour la fabrication d'un dispositif de serrage (4) selon l'une ou plusieurs des revendications 1 à 9, **caractérisé en ce que** l'élément de séparation (11) est positionné entre l'élément de base (6) et l'élément d'arrêt (12), puis l'élément d'arrêt (12) est relié à l'élément de base (6) par une liaison par conjugaison de matières.

12. Procédé selon la revendication précédente, **caractérisé en ce que** la liaison par conjugaison de matières est réalisée par soudage ultrasonore.

13. Procédé selon l'une ou plusieurs des revendications 11 et 12, **caractérisé en ce que** lors du positionnement de l'élément de séparation (11) entre l'élément de base (6) et l'élément d'arrêt (12), une liaison par complémentarité de forces est créée entre l'élément de base (6) et l'élément d'arrêt (12).
